# EUROPEAN PATENT APPLICATION

(11) **EP 4 095 553 A1**
(43) Date of publication of application: **30.11.2022**
(21) Application number: 21176595.3
(22) Date of filing: 28.05.2021
(51) Int. Cl.: G01S 13/74, G01S 13/76, G01S 5/14

(54) **METHOD FOR TRANSCEIVING A MESSAGE FOR UWB DISTANCE MEASUREMENT, METHOD AND SYSTEM FOR DISTANCE MEASUREMENT AND TRANSCEIVER FOR UWB DISTANCE MEASUREMENT**

(71) Applicant: 3db Access AG, 8800 Thalwil (CH)
(72) Inventor: Danev, Boris, 8800 Thalwil (CH); Barras, David, 3960 Sierre (CH)
(74) Representative: Calysta NV

(57) **Abstract**

Method for transceiving a message (M) for UWB distance measurement: transceiving a first information portion (A) via a narrowband channel; transceiving after the first information portion a second information portion (B) via a UWB channel, wherein the second information portion (B) comprises a distance pulse sequence being a pulse sequence to be used for distance measurement; wherein the first information portion (A) and the second information portion (B) are transceived in a common message frame.

## Description

### Technical Field

The present invention relates to the field of ultrawideband (UWB) distance measurement, in particular for UWB secure distance measurement.

### Prior art

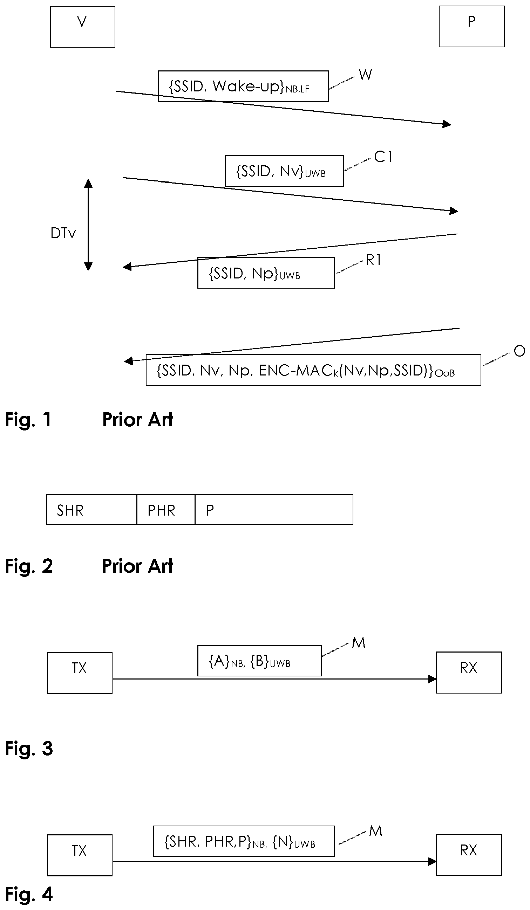

UWB secure distance measurement is well known. A verifier V sends in an UWB channel a challenge message C1 with a challenge pulse sequence Nv to a prover P which sends a response message R1 with a response pulse sequence Np in the UWB channel back to the verifier V as shown in Fig. 1. Due to the verifier time difference DTv between sending the challenge message C1 and receiving the response message R1, the time of flight of the two messages C1 and R1 can be determined and thus the distance between the verifier and the prover. Owing to the use of the UWB channel, the challenge pulse sequence Nv and the response pulse sequence Np can be sent with very short pulses of a length of 1-2 ns so that the distance between the verifier and the prover can be determined with a small error. The authenticity of the prover P can be verified based on the response pulse sequence Np and on authentication information. The authenticity of the prover P can be verified by the verifier V for example with authentication information transmitted from the prover P to the verifier. This authentication information comprises for example the Nv received at the prover P, the response pulse sequence Np transmitted and a message authentication code (MAC) of the received Nv and the transmitted Np using a shared secret key K. This authenticated message is not time critical and can be sent by the prover using the UWB channel or out-of-band (oob) channel, typically a narrow-band channel for data communication. In modern cars an UHF (315/433 MHz) narrowband channel is used.

The challenge message C1 and the response message R1 require in addition to the pulse sequences Nv and Np further additional message information which makes the transferred UWB messages much longer than the Nv and Np. As shown in Fig. 2, any message transmitted in a UWB channel (or any other channel) requires in the physical layer PHY of the OSI model a synchronization header SHR, a physical header PHR and in the physical payload P the data to be transmitted. In the messages exchanged for measuring the distance measurement, P contains the challenge/response pulse sequence. The physical payload comprises normally information about the source address, the destination address (also known as MAC header (MHR)), the service set identifier (SSID) and for the distance measurement the pulse sequence Np or Nv. When the secure distance measurement protocol requires in addition to exchange certain information, e.g. for authentication, like the encrypted response pulse sequence Np, the encrypted Nv or the encrypted SSID, the UWB messages get even longer.

While the UWB channel has the advantage of the wide bandwidth for generating very short impulses for the precise determination of the distance and for the security of the measurement against malicious third parties, it has also some disadvantages. One major disadvantage is the high power consumption of the UWB communication especially at the receiver which needs to sample the received signal at a very high sampling rate to catch/capture the fast varying signal enabled by the large bandwidth of the UWB channel of large bandwidth of the UWB channel. An UWB receiver consumes in the same time around ten times more than a narrowband receiver (NB) on a similar carrier frequency. Therefore, even if the UWB channel can be used as a data exchange link, normally it is tried to send all data which are not relevant for the distance measurement via a separate out of band message O (typically a narrowband data link) as shown in Fig. 1. One advantage of the out of band O message is that this allows to correct bit errors in the Nv and/or Np during the UWB exchange and therefore increase the performance of the ultrawideband measurement. The out of band message O is transferred thus via a separate communication channel which requires less power to transfer the data and may have more robust data communication capabilities. Normally a NB channel, e.g. with a UHF carrier frequency is used, or 2.4. GHz Bluetooth (BT) or Zigbee. This reduces the power consumption significantly. However, this has the disadvantage that the secure distance measurement requires not only a UWB communication chip, but also a NB communication chip like a BT or Zigbee chip. This increases the constructional complexity for the secure distance measurement and the coordination complexity between the different communication chips. In addition, the existing NB channels like BT or Zigbee are very slow and have a large communication management overload which makes the coordination with the UWB very difficult.

Since the power consumption of the receiver depends also on the carrier frequency of the message, some secure distance protocols use a wake up message W at a low frequency (LF) carrier frequency with a NB bandwidth which is sent from the verifier V to the prover P shortly before the UWB challenge message C1 is sent to the prover. Thus, a LF-NB receiver at the prover P can listen continuously for the wake-up message W with a very low power consumption. Once the wake-up message W is received, the UWB receiver is switched on in the prover and listens for the arrival of an UWB message as the prover expects the UWB message C1. The time uncertainty between the message W and C1 is between 1milliseconds (ms) and 100 ms, the UWB receiver at the prover is switched on for a long time, maybe even longer than the UWB message C1 itself. The same happens also at the verifier V which needs to wait for the response message R1 from the prover P.

A further disadvantage of longer UWB messages is that more pulses have to be used, which reduces significantly the link budget, i.e. the distance of the communication. This is due to regulatory reasons which limit the energy, i.e. the power multiplied by the time. Thus, with shorter UWB messages, the power of the UWB message can be increased for higher link budget but in a shorter time. With the higher power, the distance for the UWB message and thus for the distance measurement can be increased. This is a second reason why it is tried to transfer as much data as possible in the oob channel, preferably a NB channel. Transferring too many data in UWB causes longer UWB messages which do not only increase the power consumption, but also reduce the available range for the distance measurement.

### Brief summary of the invention

It is the object of the invention to provide protocol for an UWB distance measurement which avoids the problems of the state of the art, in particular which reduces the high power consumption of the UWB distance measurement as well as the latency of the distance measurement.

According to the invention, this object is solved by the independent claims.

The use of a common frame with a first information portion transceived in an NB channel and a second information portion transceived in the UWB portion, allows to avoid the SHR of the UWB messages and reduce the sent UWB pulses just to the ones essential for the distance measurement. All other information relevant for the distance measurement can be sent in the same frame in the first information portion via the NB channel which is much more power efficient. Even if the first information portion transmitted via the NB channel, allows a less precise time synchronization (precision of around hundredss of nanoseconds (ns)) than the SHR of a classic UWB message (precision of 1-2 ns), the coarse synchronization from the first information portion of the NB channel allows to know with a precision of around some 100 ns, when the second information portion in the UWB channel will be received at the receiver. When waiting for an independent UWB message package, the receiver waits normally between 1 and 100 ms, thus three orders of magnitudes more than in the present invention. The inventors found out that this waiting period for the UWB messages was one of the principal reasons for the high power consumption of the UWB distance measurement and with the present invention the power consumption could be reduced by a factor hundred to thousand (depending on the application). In addition, the UWB synchronization is not necessary any more which was even more power hungry than a normal UWB signal sampling, because receiver had to run continuously a correlation mask over the received signal during the complete waiting time in search for the UWB signal. With the coarse synchronization of the NB channel, the second information portion can be directly sampled and processed by the UWB receiver without the need of the power intensive UWB synchronization. Also, for the transmitter, this format has major advantage. Since the SHR and the PHR of the UWB signal can be avoided, the available energy in a certain time period can be used to transmit UWB pulses which are only dedicated to distance measurement with a higher amplitude so that the available range of the distance measurement is increased.

The dependant claims refer to further advantageous embodiments.

In one embodiment, the second information portion is transceived in a time period after the first information portion defined by the common message frame. This allows to know based on the first information portion quite precisely, when the second information portion shall be expected.

In one embodiment, the transceived message is a received message received at a receiver, the receiver switches on the circuitry for receiving the UWB based on the time period defined by the common message frame after the first information portion has been received.

In one embodiment, when the transceived message is a received message received at a receiver, the receiver determines a clock offset based on the first information portion and adapts the system clock of the receiver based on the determined clock-offset, wherein the receiver detects the second information portion of the message using the system clock of the receiver adapted based on the clock-offset determined based on the first information portion.

In one embodiment, the second information portion is transceived in the UWB channel without a message portion header comprising a preamble, a start of frame delimiter and packet header.

In one embodiment, the first information portion comprises an information about the length of the second information portion allowing to determine the end of the transceived message in the UWB channel.

In one embodiment, the first information portion is transceived by the same chip, by the same antenna and/or by the same transceiving circuit as the second information portion.

In one embodiment, the narrowband channel has a carrier frequency between 5 GHz and 6 GHz or between 8.5 GHz and 9 GHz and the UWB channel has a carrier frequency between 6 GHz and 8.5 GHz.

In one embodiment, the narrowband channel has a carrier frequency which has a distance of less than 2 GHz from the carrier frequency of the UWB channel. Having a similar carrier frequency for the narrowband channel and the UWB channel allows to use the same antenna.

In one embodiment, the first information portion comprises a service set identifier.

In one embodiment, the first information portion comprises a distance pulse information in encrypted form, wherein the distance pulse information allows to retrieve the distance pulse sequence.

In one embodiment, the UWB channel has at least two different UWB sub-channels, wherein the distance pulse sequence is divided in a at least two distance pulse sub-sequences, wherein the at least two distance pulse sub-sequences are transceived in either at least two second information sub-portions of the second information portion transceived at least two different UWB sub-channels or in at least two messages each comprising the first information portion and the second information portion, wherein the second information portions of the at least two messages comprising each one of the at least two distance pulse sub-sequences are transceived at at least two different UWB sub-channels. The use of different UWB sub-channels consecutively allows to exploit the maximum transmit energy permitted by the regulatory limits in a different frequency band to make multiple distance estimations at different frequencies within the shortest duration. This improves the energy efficiency and accuracy and reliability of the distance measurement due to the frequency diversity.

In one embodiment, the second information portion comprises at least two second information sub-portions which are transceived in the at least two different UWB sub-channels, wherein the first second information sub-portion is transmitted in a first UWB sub-channel and the second second information sub-portion is transmitted in a second UWB sub-channel different from the first sub-channel. Preferably, each different second information sub-portions has a well-defined time relationship with at least one of the first information portion or one of the previous second information sub-portions. Preferably, the at least two second information sub-portions transceived in the at least two UWB sub-channels have a absolute phase alignment (with respect to the carrier frequencies of the UWB sub-channels). Preferably, the distance pulse sequence is distributed over the at least two second information sub-portions. Preferably, a receiver prepares a combined signal comprising the at least two second information sub-portions in the time relationship as received and measures the distance or time of arrival of the message based on the combined signal, preferably by a correlation of the combined signal with an expected signal pattern.

In one embodiment, at least two messages each comprising a first information portion transceived in an NB channel and a second information portion transceived in an UWB channel, wherein each second information portion of the at least two messages comprises one of the at least two distance pulse sub-sequences, wherein the second information portions of the at least two messages are transceived at the at least two different UWB sub-channels. Preferably, the at least two second information portions transceived in the at least two UWB sub-channels have a absolute phase alignment (with respect to the carrier frequencies of the UWB sub-channels). Preferably, a receiver prepares a combined signal comprising the at least two second information sub-portions in the time relationship as received and measures the distance or time of arrival of the at least two messages based on the combined signal, preferably by a correlation of the combined signal with an expected signal pattern.

In one embodiment, a method for distance measurement between a verifier and prover comprising the following steps: sending a first message with a first pulse sequence from the verifier to the prover; sending a second message with a second pulse sequence from the prover to the verifier; and measuring the distance between the verifier and the prover based on the verifier time difference between sending the first message from the verifier and receiving the second message at the verifier; wherein the first message and/or the second message is transmitted based on the method described above.

In one embodiment, the distance pulse sequence of the second information portion of the first message is the first pulse sequence and/or the distance pulse sequence of the second information portion of the second message is the second pulse sequence.

In one embodiment, the first information portion of the second message comprises a prover time information, wherein the prover time information indicates the time between the receiving of the first message at the prover and the sending of the second message from the prover, wherein the distance between the verifier and the prover is determined based on the verifier time difference and the prover time difference.

In one embodiment, the first message is a challenge message and the first pulse sequence is a challenge pulse sequence, wherein the second message is a response message and the second pulse sequence is a response pulse sequence, wherein a secure distance measurement is performed by authenticating in the verifier the authenticity of the prover based on the response pulse sequence.

In one embodiment, the second pulse sequence is a periodic pulse sequence known at the verifier.

In one embodiment, a device for transceiving a message for UWB distance measurement, comprising : a transceiver configured to transceiving a first information portion via a narrowband channel and to transceiving after the first information portion a second information portion via a UWB channel, wherein the second information portion comprises a distance pulse sequence for distance measurement, wherein the transceiver is configured to transceive the first information portion and the second information portion in a common message frame.

In one embodiment, the device comprises a transceiving circuit configured to be operated in a narrowband mode and in a UWB mode, comprising one or more of the following: an oscillator configured to generate in the narrowband mode a first carrier signal for the narrowband channel as a carrier signal of the oscillator and in the UWB mode a second carrier signal for the UWB channel as the carrier signal of the oscillator; a signal generator configured to modulate the carrier signal from the oscillator to generate a modulated radio signal, wherein the signal generator is configured in the narrowband mode to modulate the first information portion on the carrier signal received from the oscillator and in the UWB mode to modulate the second information portion on the carrier signal received from the oscillator; a transmission amplifier configured to amplify the modulated radio signal; an antenna configured to transmit the amplified modulated radio signal and configured to a radio signal; a receiving amplifier configured to amplify the radio signal received at the antenna; a mixer configured to downmix the amplified radio signal with the carrier signal obtained from the oscillator; a filter configured to generate a filtered signal by in the narrowband mode filtering out from the downmixed amplified radio signal the frequencies outside of the narrowband channel and in the UWB mode filtering out from the downmixed amplified radio signal the frequencies outside of the UWB channel; an analogue to digital converter configured to convert filtered signal into a digital signal, wherein analogue to digital converter uses in the narrowband mode a first sampling frequency and in the UWB mode a second sampling frequency, wherein the first sampling frequency is lower than the second sampling frequency; and a digital processor configured to process the digital signal. Such a transceiver circuit allows to use the same transceiver components for the UWB channel and the NB channel which makes the existing chips for UWB distance measurement much more simple as the separate circuit for the NB channel can be omitted.

In one embodiment, the transceiving circuit, preferably the complete prover or verifier, is realised in one semiconductor chip.

Other embodiments according to the present invention are mentioned in the appended claims, the subsequent description of

### Brief description of the Drawings

Fig. 1 is a schematic diagram illustrating an embodiment of the prior art of secure distance measurement.
Fig. 2 is an illustration of a frame in the physical layer for an UWB message or an NB message according to the prior art.
Fig. 3 is an illustration of a first embodiment of a system with a transmitter and a receiver for distance measurement and of a first embodiment of a method for transmitting a message for distance measurement and of a first embodiment of a protocol for a message for distance measurement according to the invention.
Fig. 4 is a more detailed embodiment of the embodiment of Fig. 3.
Fig. 5 is a first embodiment of a system, method, verifier and prover for secure distance measurement use the message protocol according to the invention.
Fig. 6 is a second embodiment of a system, method, verifier and prover for distance measurement according to the invention.
Fig. 7 is an embodiment for a circuit diagram for a transceiver according to the invention.
Fig. 8 is an example spectrum of the UWB channel and the NB channel.
   In the drawings, the same reference numbers have been allocated to the same or analogue element.
Fig. 9 is an illustration of a second embodiment of a system with a transmitter and a receiver for distance measurement and of a first embodiment of a method for transmitting a message for distance measurement and of a first embodiment of a protocol for a message for distance measurement according to the invention.
Fig. 10 is an illustration of a third embodiment of a system with a transmitter and a receiver for distance measurement and of a first embodiment of a method for transmitting a message for distance measurement and of a first embodiment of a protocol for a message for distance measurement according to the invention.

### Detailed description of an embodiment of the invention

Other characteristics and advantages of the present invention will be derived from the non-limitative following description, and by making reference to the drawings.

In the following some terms used in here are defined.

A message is a data unit in the physical layer of the OSI model. In other words, a message is a data unit transmitted over a communication channel, in this invention via a radio communication channel, wherein the data unit has a common organization. This organization of the message is called frame. The message comprises normally at the beginning some information allowing the detection of a message, the determination of the clock offset, the determination of the frequency offset and/or the synchronization of the receiver with respect to the received message. The message contains normally further information regarding the sending device (origin) and the receiving device (destination) so that the receiver knows, if the message is for indeed addressed to the receiver. Otherwise, it can ignore the message. Depending on the message protocol, the administration information is more complex or simpler. This administrational information holds for the complete data transmitted in the message. A new message comprises again the administrational information and is thus completely independent from the previous message. Two messages are independent from each other in relation to the data transmitted, but also in relation to the timing of the transmission. A new message requires a new synchronization on the new message. Traditionally, a message is transmitted in the same communication channel. In the present invention, the message is transmitted in two subsequent different communication channels as will be explained in more detail below.

A frame is the definition arrangement of the data transmitted in the message. Fig. 2 shows an example definition of a frame of a message in the physical layer. The frame in the physical layer comprises a synchronization header SHR, a packet header PHR and a physical payload P. The synchronization header comprises a synchronization pattern which in NB is often called PREAMBLE and in UWB is often called SYNC. The terms PREAMBLE and SYNC are used interchangeable in here. After the synchronization pattern, the synchronization header SHR comprises often a start of frame delimiter SFD. The PHR comprises normally the length of the message so that the receiver will know, when the message/frame has ended. The physical payload comprises the transmitted data. The SHR and PHR are for the physical layer, i.e. for the receiving chip to identify a message in the received signal of the communication channel. The physical payload comprises normally another frame of the next higher OSI model layer, the data link layer, often referred as the MAC frame. The MAC frame comprises a MAC header MHR with communication management information about the sender, the receiver, the network connection, etc. The MAC payload comprises the data which should be transmitted. Even if this is a preferred organisation of the transmitted frame, other organizations are possible.

The message and/or frame is physically transmitted over a communication channel (short channel), in this invention via a radio communication channel. The radio communication channel comprises a radio signal with transmitting the message has preferably a bandwidth. The bandwidth according to the invention is either a UWB or a NB. The UWB has preferably a bandwidth of 50 MHz and more, even more preferably a bandwidth of 100 MHz and more, even more preferably a bandwidth of 200 MHz or more, even more preferably a bandwidth of 300 MHz or more, even more preferably a bandwidth of 400 MHz or more, most preferably a bandwidth of 500 MHz or more. The NB has a bandwidth that does not significantly exceed the channel's coherence bandwidth, i.e. is less than the coherence bandwidth of the channel. The NB has preferably a bandwidth smaller than 50 MHz, preferably smaller than 20 MHz, preferably smaller than 10 MHz, preferably smaller than 5 MHz, preferably smaller than 1 MHz, preferably smaller than 500 Hz. The data or bits of the message frame are transmitted by symbols. One symbol transfers normally one or a plurality of bits depending on the modulation scheme. It is also possible that a bit sequence transmits one bit. While a NB symbol (symbol of a NB channel) can be transferred over an unlimited time, but preferably long enough for high symbol energy, a UWB symbol is transferred in a short time period with a high instantaneous power. The UWB symbol can be for example some hundreds of ns long or even some microseconds, but the UWB pulses that are forming the UWB symbol are only a few ns long. The radio signal has a carrier frequency on which the message is transmitted. While traditionally, the NB carrier frequencies used for oob messages are in the ultra high frequency (UHF) band (below 3 GHz) and the UWB carrier frequencies are in the super high frequency (SHF) band (above 3GHz). Preferably, in the present invention the carrier frequency of the NB channel is larger than 2,4 GHz, preferably larger than 2,5 GHz, preferably, larger than 3GHz, preferably larger than 5 GHz. Preferably, the carrier frequency of the NB channel is chosen in vicinity of the carrier frequency of the UWB channel so that the same antenna and the same transceiver components can be used for the NB and UWB channel. Preferably, the carrier frequency of the NB channel is closer to carrier frequency of the UWB channel than 2GHz, preferably than 1 GHz, preferably than 500 MHz. Theoretically, also the same carrier frequency could be used for the NB and the UWB channel. However, for regulatory purposes, different carrier frequencies are preferred. The UWB channel can comprise different UWB sub-channels.

For the sake of brevity, the term transceive is used in here as replacement for the term transmit and/or receive so that everything needs to be explained only once for the transmission and the reception process. A message is transceived can thus mean that the message is received or the message is transmitted. The term transceiver shall mean receiver and/or transmitter. Thus, a transceiver could be a pure receiver, a pure transmitter or a combined transmitter and receiver. Normally, a combined transmitter and receiver is preferred.

A distance pulse sequence is a sequence of UWB pulses used at the receiver to measure a time of arrival of a received message. The time of arrival of the received message can be used to calculate a time of flight, a time between sending of a previous message and the time of arrival measured (e.g. a verifier time difference) or a time between the time or arrival measured and a time a subsequent message is sent out (e.g. a prover time difference). This time of arrival measurement is sometimes also called timestamping of the received message. So, other UWB pulses or NB symbols transmitted before or after the distance pulse sequence not directly used to measure the time of arrival are not considered as distance pulse sequence. In a secure distance measurement, the distance pulse sequence is a challenge pulse sequence in a challenge message and a response pulse sequence in a response message. For secure distance measurement, the distance pulse sequence is often a random pulse sequence or a quasi random pulse sequence. In a "simple" distance measurement application, the distance pulse sequence can be also a periodic sequence of UWB pulses which reduces the complexity to detect the distance pulse sequence and to measure the time of arrival. The periodicity of such a periodic sequence of pulses can be either that the same pulse is repeated or a pulse code comprising a plurality of pulses is repeated periodically (e.g, Ipatov code, Gold code). The distance pulse sequence is normally a translation of a transmitted distance bit sequence into the corresponding distance pulse sequence. Mostly, the number of UWB pulses correspond to the number of bits of the distance bit sequence as when using binary shift keying. However, the number of pulses can also be higher than the number of bits like when using spreading codes. Also, the order of the bits or spreading codes corresponds normally to the order of pulses of the distance pulse sequence. However, it is also possible to rearrange the order of the bits (or of the chips of the spreading code) in the distance pulse sequence like for example in WO2017/121452.

In some embodiment, especially for secure distance measurement, the distance bit sequence behind the distance pulse sequence must be transmitted again in a NB channel (see below). We use the term distance pulse information as any information allowing to determine the distance bit sequence or the distance pulse sequence from the distance pulse information. The distance pulse information is normally the distance bit sequence itself. The distance pulse information can however be also a any other information allowing to retrieve the distance pulse sequence. This can be for example a seed information allowing to retrieve the distance bit sequence or the distance pulse sequence. This is for example advantageous, when very long distance pulse sequences are used. The distance pulse information distinguishes further from the distance pulse sequence that the distance pulse sequence is used to measure the time of arrival of the message, while the distance pulse information is not time relevant. The distance pulse sequence is always transmitted in the UWB channel. If the distance pulse information is transmitted, it is preferably transmitted in the NB channel.

Fig. 3 shows protocol of the message M according to the invention. The message M contains in a common frame a first information portion A and a second information portion B. The first information portion A is transceived in a NB channel, while the second information portion B is transceived in a UWB channel. Preferably, the first information portion A is intended as the complete information of the message M transferred in the NB channel (before the second information portion) and the second information portion is intended the complete information of the message M transferred in the UWB channel. In a preferred embodiment, the message M does not comprise other portions than the first information portion A and the second information portion B so that the message consists of the first information portion A and of the second information portion B. However, it is also possible in another embodiment that a third information portion is transmitted after the second information portion in the NB channel. This would for example allow to improve the time resolution of the receiver based on the second information portion which is transmitted with the timely more precise UWB channel before transmitting again information in the NB channel in the same common frame.

The first information portion A is transceived before the second information portion B. Preferably, the second information portion B is transceived after the first information portion A has been transceived fully, i.e. after the end of the first information portion A has been transceived, the second information portion B is transceived.

Preferably, the second information portion B has a well-defined time relationship with respect to the first information portion A. The well-defined time relationship allows a receiver receiving the message M with the common frame to know based on the time of receiving the first information portion in the NB channel and based on the well-defined time relationship to know/calculate the expected arrival of the second information portion B. The well-defined time relationship is preferably a fixed time period between the end of the first information portion A and the beginning of the second information portion B. In one embodiment, the symbol length of the NB channel of the first information portion A and the symbol length of the second information portion B can be equal, so that the UWB symbols of the second information portion can be arranged in multiples of the symbol length after the NB symbols of the first information portion. The fixed time period between the end of the first information portion A and the beginning of the second information portion B can be for example a multiple of the length of the symbol length of the NB channel of the first information portion, e.g. n symbol lengths after the last NB symbol of the first information portion, the first UWB symbol could be transceived. n can be 0, 1, 2, 3. However, this is just one simple realisation. It is also possible that the NB symbol length has a know relationship to the UWB symbol length, so that the second information portion has a known relationship to the first information portion.

Other fixed time periods are possible. The receiver will thus know based on the fixed time relationship after the last NB symbol of the first information portion has been received, (or after any other defined time point of the first information portion), when he needs to expect the first UWB symbol of the second information portion, i.e when it needs to switch on the UWB channel receiver. The fixed time period can be defined in the protocol or standard for the message according to the invention. Due to the use of the same/common frame for the NB and the UWB channel and/or due to the fixed time period, the uncertainty when the first UWB symbol or UWB pulse in this UWB symbol arrives can be reduced from several tenths of microseconds to some hundreds of nanoseconds which reduces the power consumption of the UWB receiving period dramatically. Instead of a fixed time period, also any other well-defined time relationship between the first and second information portion A and B can be use. For example, the information about the time relationship between the portions A and B can be transmitted in the first information portion A. Due to the common frame and the well-defined time relationship, the expected time of arrival of the second information portion in the UWB channel can be determined with a precision below one microsecond, preferably below 500 ns, preferably below 400 ns, preferably below 300 ns. Thus, a receiver RX will know quite precisely when the first UWB pulse will be received. Making the time difference between the portions A and B too big could result in synchronization information from first portion to 2nd portion that are not reliable (eg. because of unmonitored drifts in-between the two portion).

The first information portion A comprises preferably a synchronization information, preferably a synchronization header SHR as in classical frames as shown in Fig. 2. The synchronization header or the synchronization information comprises preferably the preamble and the SFD. As explained above, the SHR or the preamble can used at the receiver for one or more of the following purposes: to detect the message M in the NB channel, to synchronize the receiver RX with the message M, to determine the clock-offset and to determine the frequency offset.

The receiver RX can for example detect a message M in the received NB channel by correlating the received signal of the NB channel with a reference signal which corresponds to a radio signal containing the synchronization information, the SHR and/or the preamble. When the correlation gets high, the receiver knows that a message M is received. Due to the longer symbols in the time domain and the sharper frequency shape of the symbols and due to a higher transmission amplitude, it is much easier, less power consuming and less error-prone to detect the message M in in the NB channel than the detection of a message or SHR in the UWB channel.

The receiver RX can then synchronize on the receive message M based on the detected synchronization information, SHR and/or preamble. The synchronization allows to determine, when the symbols of the synchronization information, the SHR and/or the preamble have arrived and thus to determine, when future symbols of the same common frame will arrive.

The receiver RX preferably determines from the synchronization information, the SHR and/or the preamble also a clock offset. This defines the offset of the system clock of the receiver from the system clock of the transmitter. The system clock is defined by its frequency. When the transmitter has a different system clock, the symbol can differ in length (time drift) and carrier phase (phase rotation) between the transmitter and the receiver, thus reducing the link budget and the maximum range of the communication. Therefore, it is important for the receiver to know the clock offset so that his time reference when a symbol is expected to be received at the receiver based on the synchronization above does not drift due to the different system clocks. It also important for the receiver to synchronize on the phase of the transmitter such that demodulation performance is not degraded in a coherent signalling scheme. Therefore, the receiver adapts based on the clock offset, preferably the system clock is adapted by the clock offset.

The receiver RX can also determine the frequency offset for the frequency of the carrier signal. The receiver RX can then adapt the frequency of its oscillator for generating the carrier signal by the determined frequency offset. The first information portion A comprises preferably further a PHR. The PHR comprises preferably the information about the length of the message M so that the receiver RX will know, when the last symbol of the message has been received and the message M has ended. In one embodiment, the PHR could comprise just the length of the full message M or any other information allowing the determination of the full length of the message M. In a preferred embodiment, the PHR could comprise the information of the length of the first information portion A (or any other information allowing to determine the length of the first information portion A) and the length of the second information portion B. Thus, the physical layer in the receiver RX could already determine from the PHR when the first information portion A ends, thus when the second information portion B starts and thus, when the receiving mode of the UWB receiver must be switched on. However, it is also possible to include the information about the length of the first information portion A in the remaining first information portion A, e.g. in the physical or MAC payloadP.

The rest of the message M contains the physical payload P. The physical payload is divided in the first information portion physical payload P1 defining the remain data of the first information portion A and in the second information portion B. Thus, the physical payload of the same message M or of the same frame is transferred in two different communication channels, the NB channel and the UWB channel which is a unique concept in radio communication.

The first information portion A (physical payload) comprises preferably (at least a part of) a Media Access Control (MAC) frame. The MAC frame comprises normally a MAC header (MHR) at the beginning of the MAC frame, the MAC payload and a MAC footer at the end of the MAC frame. The MHR is preferably the first information transmitted in the first information portion physical payload. The MHR contains normally communication management information like for example frame control counter, sequence number, source address, destination address and/or other communication management information. The MAC footer can be transmitted as last information of the first information portion A or as last information of the second information portion B. This depends, how the frame of the message M is defined, if the MAC frame extends over both channels or only over the NB channel/first information portion A.

The first information portion A (physical payload), preferably the MAC payload comprises the information which shall be exchanged with the message M, preferably further non time relevant distance measurement information like one or more of a SSID, a distance pulse information and the prover time difference.

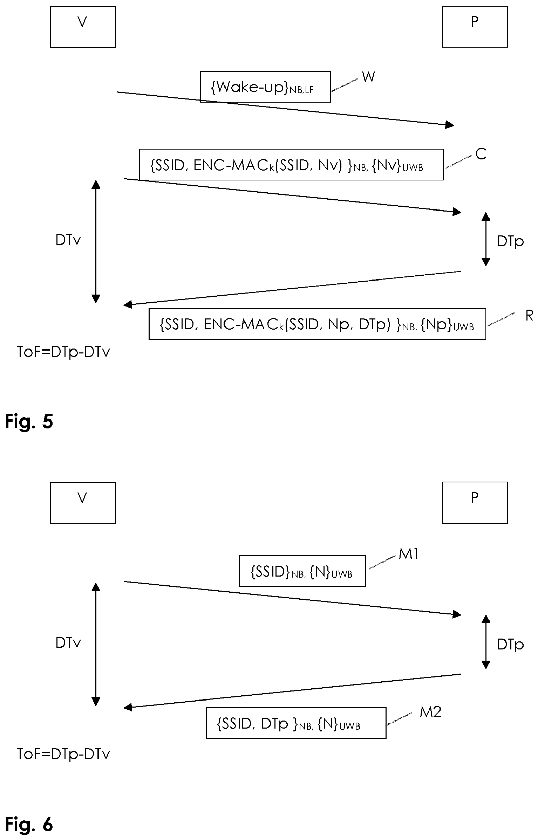

An example of such messages M for secure distance measurement is shown in Fig. 5 the messages C or R. There, the first information portion physical payload P of the messages C and R comprises the SSID and the distance pulse information. The first information portion physical payload P1 of the message R comprises further the prover time difference. The SSID is preferably transmitted once in clear format (that means not encrypted) and another time in encrypted form. The SSID in encrypted form allows to verify that the sender had the correct encryption key and/or to verify that the SSID in clear format was not manipulated by a malicious third party. However, this is not essential and the SSID could also be transferred just in clear format and/or just in encrypted format. Instead of the SSID, another connection identifier could be transceived.

An example of such a message for "simple" (or non secure) distance measurement is shown in Fig. 6 with the messages M1 and M2. Here, the non time relevant distance measurement transmitted in the message M1 from the verifier to the prover P is the SSID. The non time relevant distance measurement transmitted in the message M2 from the prover P to the verifier V is the SSID and the prover time difference DTp. The encrypted information for the verification is not necessary anymore.

The distance pulse information is preferably transceived in the first information portion A (physical payload P1) allowing the receiver RX to verify the received distance pulse sequence in the UWB channel based on the received distance pulse information of the NB channel. The distance pulse information is in Fig. 5 and 6 transceived as the distance pulse bit sequence Np underlying thethe distance pulse sequence N or Np.

The prover time difference DTp is illustrated in the example embodiments of Fig. 5 and 6. The prover time difference DTp is the time difference between the time of transmitting the message R, M2 from the prover P to the verifier V and the time of arrival of the message C, M1 from the verifier V at the prover P. The time of arrival is measured based on the time of arrival of the distance pulse sequence N, Np of the second information portion of the message M1, C.

The second information portion B comprises the distance pulse sequence N as shown in Fig. 4. While a state of the art UWB message requires to transfer in the UWB channel the SYNC, SFD, PHR and MAC frame before sending the distance pulse sequence, in a preferred embodiment, the second information portion B does not comprise a separate/full UWB message header with one or more of a preamble (equivalent to SYNC), SFD, PHR, MHR and SSID. This reduces the number of pulses transmitted in the UWB channel significantly. In one embodiment, the second information portion B comprises only the distance pulse sequence. In another embodiment, a reduced UWB message header can be sent. This reduced UWB message header could comprise just the SYNC pattern or even a reduced SYNC pattern. This can be used to improve the synchronization of the receiver RX on the message M, because the UWB pulses allow a synchronization up to some nanoseconds, while the NB symbols allow only a synchronization of some hundreds of nanoseconds. The reduced UWB message header could then be used to improve the synchronization of the receiver RX on the message M which was performed on (the synchronization information of) the first information portion A.

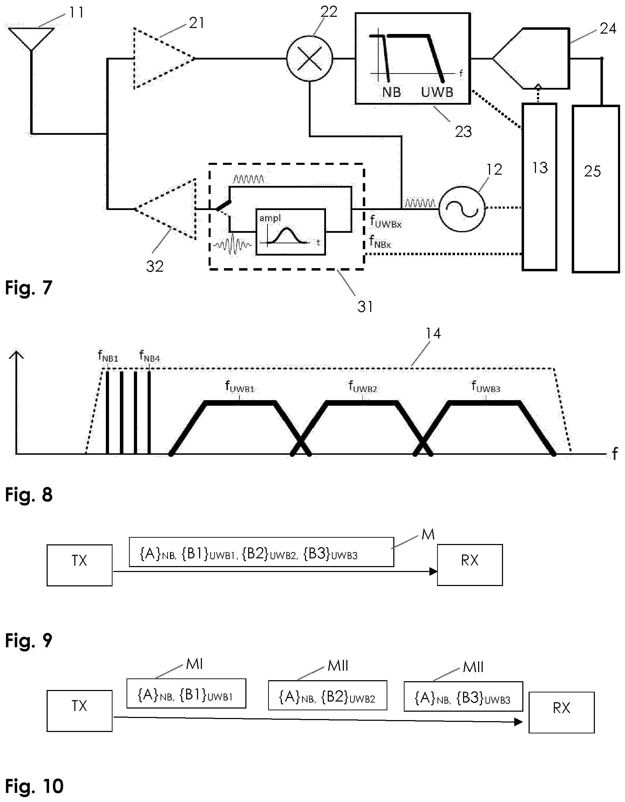

Fig. 9 shows a further embodiment of the invention. The second information portion B is transceived in different UWB sub-channels UWB1, UWB2, UWB3. The second information portion comprises at least two second information sub-portions B1, B2, B3 which are transceived in at least two different UWB sub-channels UWB1, UWB2, UWB3. The at least two UWB sub-channel UWB1, UWB2, UWB3 are different. The at least two UWB sub-channels UWB1, UWB2, UWB3 have preferably different carrier frequencies f_{UWB1}, f_{UWB2}, f_{UWB3}. The at least two UWB sub-channels are preferably non-overlapping. An example of three different non-overlapping UWB sub-channels UWB1, UWB2, UWB3 is shown in Fig. 8. The first second information sub-portion B1 is transmitted in a first UWB sub-channel UWB1 and the second second information sub-portion B2 is transmitted in a second UWB sub-channel UWB2 different from the first sub-channel UWB1. The first information portion A and the at least two different second sub-portions B1, B2, B3 are transceived in one common frame. The distance pulse sequence is preferably divided into at least two distance pulse sub-sequences which are each transmitted in a different one of the at least two second information sub-portions B. Two subsequent different second information sub-portions transceived at different UWB sub-channels have preferably a well-defined time and/or (absolute) phase relationship among them. The well-defined time relationship between the different subsequent second information sub-portions B is like the well-defined time relationship between the first information portion A and the second information portion B and is for the sake of brevity not repeated. Since the regulatory limit for the link budget holds only for each UWB sub-channel, the second information portion B=B1, B2, B3 transceived in the UWB channel can be transceived in different (subsequent) UWB sub-channels so that for the information sub-portions B1, B2, B3 of each UWB sub-channel can each use the full link budget. Thus, for n different second information sub-portions B1, ..., Bn sent at n different UWB sub-channels, the available UWB link budget for the full UWB-channel is n times larger (if the different UWB sub-channels do not overlap). This allows much larger distance ranges and more robustness in noisy and multipath environments. In addition, the UWB frequency diversity can increase the robustness of the distance measurement, when one UWB channel is particularly noisy, and improves thus the precision of the distance measurement.

Fig.10 shows a further embodiment of the invention similar to the embodiment of Fig. 9. Instead of transceiving the at least two different distance pulse sub-sequences in different second information sub-portions, they are transceived in at least two different messages MI, MII, MIII, in particular in the second information portion B1, B2, B3 of the respective messages MI, MII, MII. Each of those at least two messages is transceived with a first information portion A in the NB channel and with a second information portion B in the UWB channel, preferably each second information portion B1, B2, B3 in a different UWB sub-channel UWB1, UWB2, UWB3. Two subsequent different messages MI, MII, MII, preferably their second information portions B1, B2, B3 have preferably a well-defined time and/or (absolute) phase relationship among them. The first information portion A can be the same for each message MI, MII, Mill or could be reduced for the messages MII, Mill after the first message MI. Preferably, the receiver RX will synchronize with each first information portion A of each message to avoid drifts over long time periods.

In both embodiments of Fig. 9 and 10, the different distance pulse sub-sequences are received (via different second information sub-portions B1, B2, B3 of the same message M or via the second information portions B1, B2, B3 of different messages MI, MII, Mill) and a combined signal with the respective distance pulse sub-sequences at the respective receiving times are generated. The distance measurement or the time of arrival of the message(s) is then performed based on the combined signal, preferably via a correlation with respect to an expected receiving pattern.

The first information portion A, the PHR, the first information portion physical payload P1, the SSID or the MAC payload can comprise information about the length and/or sub-channel of the first information portion A and of the second information portion or sub-portions. If the message protocol/transceiver supports different UWB sub-channels, the first information portion A, the PHR, the first information portion physical payload P1, the SSID or the MAC payload can comprise the length and UWB sub-channel of each second information sub-portion B1, B2, B3. The length of the last second information sub-portion B3 can be omitted, if this information can be obtained otherwise, e.g. from the total length of the message. With a well-defined time period between the end of each first information portion A or second information sub-portion and the sub-sequent second information sub-portion, this information would allow the receiver to switch on the correct UWB sub-channel at the correct time, when the respective second information sub-portion is to be expected. When the message M comprises a second information portion B transceived only in one UWB sub-channel, this information would be transmitted only for the one second information potion B1 so that the receiver RX can switch into the correct UWB sub-channel. The first information portion A, the PHR, the first information portion physical payload P1, the SSID or the MAC payload can comprise the length and/or NB sub-channel of the first information portion. When the receiver or message protocol supports different NB sub-channels (as shown for example in Fig. 8), the used NB sub-channel in the first information portion A is determined based on the current state of the art. There are different schemes for detecting the NB sub-channel used for a message M. One is indeed the receiver to listen to all NB channels, another is to have some dynamic channel selection scheme/protocol.

The transmitter TX and the receiver RX are preferably each a combined transmitter and receiver so that the transmitter TX can transmit the described message M and can receive the described message M and that the receiver RX can transmit the described message M and can receive the described message M. This allows a bi-directional communication between the transmitter TX and the receiver RX. However, it could also be possible to use a separate transmitter and receiver in the verifier V and the prover P. When we subsequently talk about a receiver RX, we mean either a combined transmitter-receiver working in receiving mode or a pure receiver. When we subsequently talk about a transmitter TX, we mean either a combined transmitter-receiver working in transmitting mode or a pure transmitter. The transceiver comprises preferably a NB mode to transceive in the NB channel and an UWB mode to transceive in the NB channel. The NB channel can comprise several NB sub-channels. The UWB channel can comprise different UWB channels.

The transmitter TX transmits the first information portion A in the NB channel. Then, the transmitter TX transmits the second information portion B in the UWB channel at the well-defined time relationship with respect to the first information portion A. So, preferably, the transmitter TX transmits the second information portion B in the UWB channel the fixed time period after the (last symbol of the) first information portion A has been sent in the NB channel. Since the UWB channel does not need the message communication information like SHR, PHR and/or the MAC frame, the second information portion B transmitted in the UWB channel is much shorter compared to traditional UWB messages which saves transmission energy and/or allows to increase the transmission power without exceeding the link budget. The transmitter TX switches preferably from a NB mode into an UWB mode, when the last symbol of the first information portion A has been transmitted. The first symbol/pulse of the second information portion B will be transmitted in the UWB channel at the time point defined by the well-defined time relationship of the second information portion B with respect to the first information portion A.

When the second information portion B comprises different second information sub-portions B1, B2, B3 transmitted in different UWB sub-channels UWB1, UWB2, UWB3, the transmitter TX will switch after the last symbol of the first information portion A has been transmitted into the first UWB sub-channel UWB1 of the first second information sub-portion B1, will switch after the last symbol of the first second information portion B1 has been transmitted into the second UWB sub-channel UWB2 of the second second information sub-portion B2 and (if there are further second information sub-portions) will switch after the last symbol of the second second information sub-portion B2 has been transmitted into the third UWB sub-channel UWB3 of the third second information sub-portion B2. The transmitter TX will transmit the first symbol of the first second information sub-portion B1 at the time point defined by the well-defined time relationship with respect to the first information portion A. The transmitter TX will transmit the first symbol of the second second information sub-portion B1 at the time point defined by the well-defined time relationship with respect to the first information portion A or the first second information portion B1. The transmitter TX will transmit the first symbol of the third second information sub-portion B1 at the time point defined by the well-defined time relationship with respect to the first information portion A or the first second information portion B1.

The receiver RX will listen for the arrival of the message M. When the receiver RX detects the synchronization information, in particular the preamble, it will preferably determine the clock offset with respect to the transmitter TX. Based on the determined clock offset and the time of arrival of the received synchronization information and/or preamble, the receiver RX can synchronize on the message M. This is normally done by adapting the system clock by the determined clock-offset before extrapolating the expected arrival times of the symbols of the message M. Thus, the receiver RX will know, when the symbols of the message M will arrive. Based on the further information of the first information portion A, for example based on the PHR or further information in the first information portion physical payload P1, the receiver RX will know, when the first information portion A ends (e.g. how many symbols the first information portion A has) and when the second information portion B ends (e.g how many symbols the second information portion B has). Thus, the receiver RX can determine based on the information when the first information portion A ends and based on the well-defined time relationship between the first information portion A and the second information portion B, when the first UWB symbol or pulse of the second information portion B is expected. Since the system clock of the receiver RX has been adapted by the clock offset determined based on the first information portion A received in the NB channel, also the time, when the first UWB symbol or pulse of the second information portion B of the message M depends on the clock offset determined based on the first information portion A. Thus, the receiver RX detects the second information portion B based on the system clock adapted with respect to (or synchronized on) the clock offset determined from the first information portion A. The time, when the first UWB symbol or pulse of the second information portion B of the message is expected is preferably further based on the precision of the synchronization of the first information portion A in the NB channel. For example, when the precision of the synchronization in the NB channel is 200 ns, the time, when the first UWB symbol or pulse of the second information portion B is expected is 200 ns earlier to be sure that the UWB channel is already in the receiving/listening mode, when the first symbol of the second information portion B will be received. The receiver RX switches on the UWB receiving mode of the receiver RX, when the first UWB symbol or pulse of the second information portion B is expected. Due to the previous synchronization of the receiver RX to the message M in the NB channel, the UWB receiver in the receiver RX can switch on the UWB receiving mode precisely when the first UWB symbol or pulse will arrive. In the state of the art, when the oob information was transmitted in a separate message, it was not possible to know when the first UWB symbol would arrive. Therefore, the time of the UWB receiving mode waiting and listening for the UWB message to arrive was not predictable and takes normally between several milliseconds to several hundreds of milliseconds. Avoiding this waiting period for the UWB message by transmitting the second information portion B in a UWB channel in the same message M as the first information portion A transmitted in the NB channel, allows thus to significantly reduce the power consumption of the receiver RX.

When the second information portion B of the message M comprises different second information sub-portions B1, B2, B3 transceived at different UWB sub-channels UWB1, UWB2, UWB3, the receiver RX will switch within the UWB mode among different UWB sub-channels. The receiver RX will switch into the UWB sub-channel UWB1, UWB2, UWB3 of the respective second information sub-portion B1, B2, B3, when the first symbol of the respective second information sub-portion B1, B2, B3 is expected according to the well-defined time relationship with one of the previous information (sub-) portions (the first information portion A or one of the previously received second information sub-portions). The receiver RX will switch into the first UWB sub-channel UWB1, when the first symbol of the first second information sub-portion B1 is expected according to the well-defined time relationship with the first information portion A. The receiver RX will switch (from the first UWB sub-channel UWB1) into the second UWB sub-channel UWB2, when the first symbol of the second second information sub-portion B2 is expected according to the well-defined time relationship with the first information portion A or the first second information sub-portion B1. The receiver RX will switch (from the second UWB sub-channel UWB2) into the third UWB sub-channel UWB3, when the first symbol of the third second information sub-portion B3 is expected according to the well-defined time relationship with the first information portion A or the first second information sub-portion B1 or the second second information sub-portion B2.

Fig. 7 shows an exemplary embodiment of a transceiver according to the invention. The transceiver shown in Fig. 7 is a combined transmitter and receiver. In the shown embodiment, the transceiver can be operated in a NB mode for receiving and/or transmitting in a NB communication channel and in a UWB mode for receiving and/or transmitting in a UWB communication channel. If the transceiver is configured to transmit in different UWB sub-channels UWB1, UWB2, UWB3, the UWB mode has different UWB sub-modes (in the description sometimes shortly also referred to as UWB sub-channel). If the transceiver is configured to transmit in different NB sub-channels NB1, NB2, NB3, NB4, the NB mode has different NB sub-modes (in the description sometimes shortly also referred to as NB sub-channel). A controller 13 is configured to switch the transceiver between the different modes. The transceiver comprises the following.

The transceiver comprises an oscillator 12. The oscillator 12 configured to generate in the UWB mode a carrier signal for the UWB channel and in the NB mode a carrier signal for the NB channel. The carrier signal of the UWB channel has preferably a carrier frequency F_{UWB} at a frequency for UWB transmission, e.g. between 6-8.5 GHz. The carrier signal of the NB channel has preferably a carrier frequency f_{NB} at a frequency for BB transmission. Preferably, the carrier frequency f_{NB} is selected close to the carrier frequency F_{UWB} of the UWB channel, preferably closer than 3 GHz, preferably closer than 2 GHz, preferably closer than 1.5 GHz, preferably closer than 1GHz, preferably closer than 750 MHz, preferably closer than 500 MHz. The carrier frequency f_{NB} can be for example between 5 and 6 GHz or between 8 or 8.5and 9 GHz, while the carrier frequency F_{UWB} is between 6 and 8 or 8.5 GHz. This would allow to use common receiving hardware for the NB and the UWB channel. The oscillator can be configured to generate different carrier signals of different UWB sub-channels in different UWB sub-modes. Preferably, the oscillator 12 is an adaptive oscillator which can produce the carrier signal of the UWB channel and the carrier signal of the NB channel based on a control input received from a controller 13. The adaptive oscillator 12 is preferably also configured to generate the carrier signal of the different NB sub-channels and/or of the different UWB sub-channels. However, it is also possible that oscillator comprises different sub-oscillators for generating the carrier signal of the NB channel and the UWB channel (or for generating the carrier signal of the different NB sub-channels and/or different UWB sub-channels). The carrier signal generated by the oscillator 12 is preferably used for transmission and for receiving.

The transceiver comprises a signal generator 31 configured to modulate the carrier signal from the oscillator to generate a modulated radio signal. The signal generator 31 is configured in the NB mode to modulate the first information portion A with a narrowband bandwidth on the carrier signal received from the oscillator. The signal generator 31 is configured in the UWB mode to modulate the second information portion B with an UWB bandwidth on the carrier signal received from the oscillator to obtain the modulated (UWB) radio signal. The signal generator 31 is preferably switched between the UWB mode and the NB mode by the controller 13 to obtain the modulated (NB) radio signal. The signal generator 31 is here realised with two parallel signal paths, one for the NB mode and one for the UWB mode and with a switch allowing to switch between the two path according to the selected mode of the transceiver.

The transceiver comprises preferably a transmission amplifier (e.g. a power amplifier) configured to amplify the modulated radio signal.

The transceiver comprises an antenna 11 configured to transmit the (amplified) modulated radio signal and configured to receive a radio signal. Preferably, the same antenna 11 is used for transmitting and receiving. The antenna 11 is configured to transceive a radio signal in the UWB channel and in the NB channel. Preferably, the same antenna 11 is used for the UWB and NB channel. If the UWB channel comprises different UWB sub-channels, the antenna is preferably configured to transceive at the NB channel and all different UWB sub-channels.

The transceiver comprises preferably a receiving amplifier 21 configured to amplify the radio signal received at the antenna 11. The receiving amplifier 21 is preferably a low noise amplifier.

The transceiver comprises a mixer 22 configured to downmix the (amplified) received radio signal to obtain a downmixed signal (often also called intermediate frequency signal or baseband signal). Preferably, the the carrier signal obtained from the oscillator is used to downmix the received radio signal. Thus, the correct carrier frequency is used during receiving for NB and UWB mode as the oscillator's outputs in the respective mode the correct carrier signal.

The transceiver comprises preferably a filter 23 configured to generate a filtered signal. The filter 23 filters the downmixed signal by a NB bandwidth filter in the narrowband mode and a UWB bandwidth filter in the UWB mode. The filter 23 is preferably an adaptive filter controlled by the controller 13 depending on the current mode of the transceiver. However, it is also possible to have distinct filters for the UWB mode and for the NB mode among which are switched depending on the mode of the transceiver.

The transceiver comprises an analogue to digital converter (ADC) 24 configured to convert the (filtered) downmixed signal into a digital signal. The ADC 24 uses in the narrowband mode a first sampling frequency and in the UWB mode a second sampling frequency, wherein the first sampling frequency is lower than the second sampling frequency. The first sampling frequency is preferably below 100 MHz, preferably below 50 MHz, preferably below 20 MHz, preferably below 10 MHz. The second sampling frequency is preferably above 100 MHz, preferably abov 500 MHz, preferably above 700 MHz, preferably above 800 MHz, preferably above 900 MHz.

The digital signal is then further processed in a digital signal processor 14. This digital signal processor 14 is preferably a digital baseband unit or digital modem. The digital signal processor 14 is configured to process the digitalized signal from the first information portion A received in the NB channel and to process the digitalized signal of the second information portion B received in the UWB portion. The digital signal processor 14 is configured for example to synchronize the transceiver on the message M (based on the SHR or preamble), to determine the clock-offset (based on the SHR or preamble), to read out data (of the first information portion A, the PHR, the MHR, the MAC payload), to measure the time of arrival (based on the UWB distance pulse sequence).

The controller 13 controls the mode of the transceiver and of the respective parts of the transceiver, in particular of the oscillator 12, the signal generator 31, the filter 23 and the ADC 24. However, the controller 13 can be integrated also in the digital processor 14.

Thus, the transceiver can use the same circuit for the NB mode and the UWB mode. In the state of the art, two different circuits where used for sending NB messages and UWB messages. Preferably, the circuit of Fig. 7 is realised in one combined UWB-NB transceiving chip. This can be achieved by choosing the NB and the UWB carrier frequencies close. Realising the NB and UWB transceiver on the same chip or in the same circuit facilitates also the coordination of the UWB channel and the NB channel in the same frame of the message M. This is very difficult when using different UWB and NB transceiving circuits which need to be coordinated by a CPU or other third controller. An example spectrum of the possible channels of such a chip or circuit is shown in Fig. 8.

Fig. 5 and 6 show the use of the above-described message M for UWB distance measurement. Fig. 5 shows an embodiment of a method and system of secure distance secure measurement while Fig. 6 shows an embodiment of "simple" distance measurement, i.e. distance measurement without authentication of the prover P.

The system and/or method comprises a verifier V and a prover P.

The verifier V send a first message C or M1 with a first pulse sequence N or Nv to the prover P. The first pulse sequence is a distance pulse sequence as defined above. According to the invention, the first message C or M1 comprises a first information portion A transmitted in the NB channel and a second information portion B transmitted in the UWB portion. The second information portion B comprises the first pulse sequence N or Nv so that the prover P can determine the time of arrival of the first message C or M based on the first pulse sequence received in the UWB channel. Thus, the first pulse sequence is received as a sequence of short UWB pulses whose time of arrival can be detected with a high precision. The first information portion A of the first message C or M1 comprises preferably an identifier (SSID), the SHR and/or the PHR. Thus, (most of) the information not used for the distance measurement is thus transmitted in the NB channel with a much lower power consumption. Especially, the long and power consuming waiting periods for UWB messages at the prover P can be fully avoided, as the waiting period for the first message M1 or C is realized fully in the NB channel at a much lower power consumption. Thus, the first pulse sequence can be transmitted with a higher power, as the UWB portion of the message does not need to be wasted for data information transfer in the UWB channel. For secure distance measurement as shown in fig. 5, the first information portion A, preferably the first information portion payload P1, preferably the MAC payload comprises further encrypted information like the encrypted SSID (in addition to the SSID in clear format) and/or the encrypted first pulse sequence or its corresponding distance pulse information. The encryption is based on a common key known by both verifier V and prover P, preferably a symmetric key. The first pulse sequence for secure distance measurement is also called the challenge pulse sequence and/or the first message C is also called the challenge message.

The prover P detects in the NB channel the first message C or M1. The prover P reads out the (non time relevant) information from the first information portion A, like the SSID (and for secure distance measurement in encrypted form the SSID and the distance pulse information ENC-MACk(SSID, Nv)). For secure distance measurement, the prover P decrypts the encrypted information. The knowledge of the distance pulse information Nv allows to know the expected challenge pulse sequence Nv which will arrive in the UWB channel of the second information portion B. This knowledge facilitates the detection of the time of arrival based on the distance pulse sequence Nv. For the "simple" distance measurement in Fig. 6, preferably a fixed and/or periodic first pulse sequence N is used which facilitates the detection of the first pulse sequence in the UWB channel and/or the measurement of the time of arrival of the first message M1 at the prover P based on the first pulse sequence N. Based on the information from the first information portion A received in the NB channel and based on the well-defined time relationship between the first information portion A and the second information portion B, the prover P can determine the expected time, when the first symbol of the second information portion B will be received. The prover P switches at this time in the UWB mode to receive the second information portion B, in particular to receive the first pulse sequence N or Nv. The prover P determines based on the first pulse sequence Nv the time of arrival of the first message C or M1. The prover P determines the prover time difference DTp based on the time of arrival of the first message C or M1 and the time of transmitting the second message R or M2. For secure distance measurement, the prover P verifies then the authenticity of the verifier V by decrypting the SSID and the Nv and comparing it with the SSID transferred without encryption in the first information portion of the challenge message C and with the challenge pulse sequence Nv received in the second information portion of the message M.

The prover P sends back a second message M2 or R. The second message M2 or R comprises a first information portion in the NB channel and a subsequent second information portion in the UWB channel. The second information portion B comprises the second pulse sequence N or Np. The second pulse sequence is a distance pulse sequence as defined above. For secure distance measurement, the second message is often called response message R and the second pulse sequence is often called response pulse sequence. The prover P transmits in the first information portion A the SSID and the prover time difference DTp. For secure distance measurement, the prover P transmits preferably in the first information portion A in addition in encrypted form the SSID (in addition to its clear form), the response pulse information Np and the prover time difference (only in encrypted form) ENC-MACk(SSID, Np, DTp). For the simple distance measurement in Fig. 6, the second pulse sequence can be the same as the first pulse sequence. However, it can also be used a different pulse sequence in the first and second message M1 and M2. The second pulse sequence for the simple distance measurement is preferably a periodic and/or fixed pulse sequence.

The verifier V receives the first information portion A of the first message R or M2 in the NB channel. For secure distance measurement, the verifier V decrypts the encrypted information of the first information portion A of the response message R. The encrypted information is decrypted with the common key. The decryption can happen before or after or during the receiving of the second information portion B. Based on the information from the first information portion A received in the NB channel and based on the well-defined time relationship between the first information portion A and the second information portion B, the prover P can determine the expected time, when the first symbol of the second information portion B will be received. The verifier V switches at this time in the UWB receiving mode or switches the UWB receiving mode on to receive the second information portion B of the second message R or M2, in particular to receive the second pulse sequence N or Np. The verifier V determines based on the response pulse sequence Np the time of arrival of the message R. The verifier V determines the verifier time difference DTv between sending out the first message C or M1, in particular the first pulse sequence N or Nv and receiving the second message M2 or R, in particular the second pulse sequence N or Np at the verifier V. The verifier V calculates then the time of flight ToF as the difference of the verifier time difference DTv and the prover time difference DTp. For secure distance measurement, the verifier V verifies then the authenticity of the prover P by decrypting the SSID and the response pulse information Np and comparing it with the SSID transferred without encryption in the first information portion A of the message R and with the Np received in the second information portion B of the message R. If the time of flight ToF or the corresponding distance is smaller than a threshold and if the authenticity of the prover P has been approved, a certain request can be approved.

For very power sensitive applications, a further wake up message W in a low power channel can be sent from the verifier V to the P to switch the NB receiving mode on only, when such a wake-up message W is received. The listening in the low power channel is then even less power consuming than in the NB channel. The low power channel can be a NB channel at a lower carrier frequency, e.g. a low frequency (LF) frequency. Such a wake-up message W is shown in the embodiment of Fig. 5, but could equally be applied in an embodiment as described in Fig. 6. While it seems very advantageous to send the prover time difference in the second message M1 or response message R from the prover P to the verifier V, it would also be possible to solve this differently. For example, the prover P could send the response message always after a fixed time after having received the message C or M1 from the verifier V. When the verifier V knows this fixed time, it is not necessary to transmit the prover time difference DTp.

It should be understood that the present invention is not limited to the described embodiments and that variations can be applied without going outside of the scope of the claims.

## Claims

1. Method for transceiving a message (M) for UWB distance measurement :
transceiving a first information portion (A) via a narrowband channel,
transceiving after the first information portion a second information portion (B) via a UWB channel, wherein the second information portion (B) comprises a distance pulse sequence (N, Nv, Np) being a pulse sequence to be used for distance measurement,
**characterized in that**
the first information portion (A) and the second information portion (B) are transceived in a common message frame.

2. Method according to the previous claim, wherein the second information portion (B) is transceived in a time period after the first information portion defined by the common message frame.

3. Method according to the previous claim, wherein, when the transceived message (M) is a received message (M) received at a receiver (RX), the receiver (RX) switches on the circuitry for receiving the UWB based on the time period defined by the common message frame after the first information portion (A) has been received.

4. Method according to one of the previous claims, wherein, when the transceived message (M) is a received message (M) received at a receiver (RX), the receiver (RX) determines a clock offset based on the first information portion (A) and adapts the system clock of the receiver (RX) based on the determined clock-offset, wherein the receiver (RX) detects the second information portion (B) of the message (M) using the system clock of the receiver (RX) adapted based on the clock-offset determined based on the first information portion (A).

5. Method according to one of the previous claims, wherein the second information portion (B) is transceived in the UWB channel without a message portion comprising a preamble, a start of frame delimiter (SFD) and packet header (PHR).

6. Method according to one of the previous claims, wherein the first information portion (A) comprises an information about the length of the second information portion (B) allowing to determine the end of the transceived message (M) in the UWB channel.

7. Method according to one of the previous claims, wherein the first information portion (A) is transceived by the same chip, by the same antenna and/or by the same transceiving circuit as the second information portion (B).

8. Method according to one of the previous claims, wherein the UWB channel has at least two different UWB sub-channels (UWB1, UWB2, UWB3), wherein the distance pulse sequence is divided in a at least two distance pulse sub-sequences, wherein the at least two distance pulse sub-sequences are transceived in either
at least two second information sub-portions (B1, B2, B3) of the second information portion transceived at the at least two different UWB sub-channels (UWB1, UWB2, UWB3) or
in at least two messages each comprising a first information portion (A) transceived in the NB channel and a second information portion (B1, B2, B3), wherein the second information portions of the at least two messages comprising each one of the at least two distance pulse sub-sequences are transceived at the at least two different UWB sub-channels (UWB1, UWB2, UWB3).

9. Method for distance measurement between a verifier (V) and prover (P) comprising the following steps:
sending a first message (C, M1) with a first pulse sequence (N, Nv) from the verifier (V) to the prover (P);
sending a second message (R, M2) with a second pulse sequence from the prover (P) to the verifier (V);
measuring the distance (ToF) between the verifier (V) and the prover (P) based on the verifier time difference (DTv) between sending the first message (C, M1) from the verifier (V) and receiving the second message (R, M2) at the verifier (V);
**characterized in that**
the first message (C, M1) and/or the second message (R, M2) is transmitted based on the method of one of the previous claims.

10. Method according to claim 9, wherein the first information portion (A) of the second message (R, M2) comprises a prover time information (DTp), wherein the prover time information (DTp) indicates the time between the receiving of the first message (C, M1) at the prover (P) and the sending of the second message (R, M2) from the prover (P), wherein the distance between the verifier (V) and the prover (P) is determined based on the verifier time difference (DTv) and the prover time difference (DTp).

11. Method according to one of claims 9 to 10, wherein the steps of sending the first message (Ci) from the verifier (V) to the prover (P), of sending the second message (Ri) from the prover (P) to the verifier (V) and measuring the distance (ToFi) between the verifier (V) and the prover (P) are repeated in two or more iterations (i), wherein in at least two of the iterations, a different UWB sub-channel of the UWB channel is used to transmit the second information portion (B) of the first and/or second message (Ri, Ci) wherein the final distance (ToF) between the verifier (V) and the prover (P) is determined based on the distances (ToFi) between the verifier (V) and the prover (P) measured in the two or more iterations.

12. Device for transceiving a message for UWB distance measurement, comprising :
a transceiver configured to transceiving a first information portion (A) via a narrowband channel and to transceiving after the first information portion (A) a second information portion (B) via a UWB channel, wherein the second information portion (B) comprises a distance pulse sequence (N, Nv, Np) for distance measurement,
**characterized in that**
the transceiver is configured to transceive the first information portion (A) and the second information portion (B) in a common message frame.

13. Device according to the previous claim comprising a transceiving circuit configured to be operated in a narrowband mode and in a UWB mode, comprising:
an oscillator (12) configured to generate in the narrowband mode a first carrier signal for the narrowband channel as a carrier signal of the oscillator and in the UWB mode a second carrier signal for the UWB channel as the carrier signal of the oscillator,
a signal generator (31) configured to modulate the carrier signal from the oscillator (12) to generate a modulated radio signal, wherein the signal generator is configured in the narrowband mode to modulate the first information portion (A) on the carrier signal received from the oscillator (12) and in the UWB mode to modulate the second information portion (B) on the carrier signal received from the oscillator (12),
an transmission amplifier (32) configured to amplify the modulated radio signal,
an antenna (11) configured to transmit the amplified modulated radio signal and configured to a radio signal,
a receiving amplifier (21) configured to amplify the radio signal received at the antenna (11),
a mixer (22) configured to downmix the amplified radio signal with the carrier signal obtained from the oscillator (12),
a filter (23) configured to generate a filtered signal by in the narrowband mode filtering out from the downmixed amplified radio signal the frequencies outside of the narrowband channel and in the UWB mode filtering out from the downmixed amplified radio signal the frequencies outside of the UWB channel,
a analogue to digital converter (24) configured to convert filtered signal into a digital signal, wherein analogue to digital converter uses in the narrowband mode a first sampling frequency and in the UWB mode a second sampling frequency, wherein the first sampling frequency is lower than the second sampling frequency, and
a digital processor (25) configured to process the digital signal.

14. System for distance measurement between a verifier (V) and prover (P) comprising the verifier (V) and the prover (P), wherein the verifier (V) is configured to sending a first message (C, M1) with a first pulse sequence (N, Nv) to the prover (P), wherein the prover (P) is configured, after having received the first message, to sending a second message (R, M2) with a second pulse sequence (N, Np) to the verifier (V), wherein the verifier (V) is configured to measuring the distance (ToF) between the verifier (V) and the prover (P) based on the verifier time difference (DTv), wherein the verifier time difference (DTv) is the time difference between sending the first message from the verifier (V) and receiving the second message at the verifier (V);
**characterized in that**
the verifier (V) comprises a transceiver according to claim 12 or 13 for transmitting the first message (C, M1) and/or for receiving the second message (R, M2), and/or
the prover (P) comprises a transceiver according to claim 12 or 13 for transmitting the second message (R, M2) and/or for receiving the first message (C, M1).

15. Message protocol for UWB distance measurement, the message comprising in the physical layer a frame with:
a first information portion (A) including synchronization information,
after the first information portion (A), a second information portion (B) comprising a distance pulse sequence (N, Nv, Np) to be used for distance measurement,
**characterized in that**
the first information portion (A) is transmitted via a narrowband channel, and
the second information portion (B) is transmitted via a UWB channel.
